# FASCICULE DE BREVET EUROPEEN

(11) **EP 3 888 227 B1**
(45) Date de publication et mention de la délivrance du brevet: **07.12.2022**
(21) Numéro de dépôt: 19823784.4
(22) Date de dépôt: 08.10.2019
(51) Int. Cl.: B60L 53/12, H02J 50/90, B60L 53/38, B60L 53/37

(54) **PROCÉDÉ DE RECHARGE PAR INDUCTION D'UNE BATTERIE D'UN VÉHICULE GARÉ, VIA UN BOÎTIER SE DÉPLAÇANT PAR RAPPORT À UNE RÉFÉRENCE**
VERFAHREN ZUM INDUKTIVEN AUFLADEN EINER BATTERIE EINES GEPARKTEN FAHRZEUGS UNTER VERWENDUNG EINES RELATIV ZU EINER REFERENZ BEWEGBAREN GEHÄUSES
METHOD FOR INDUCTIVELY RECHARGING A BATTERY OF A PARKED VEHICLE, USING A HOUSING THAT CAN MOVE RELATIVE TO A REFERENCE

(30) Priorité: 26.11.2018 FR 1871811
(43) Date de publication de la demande: 06.10.2021
(73) Titulaire: PSA Automobiles SA, 78300 Poissy (FR)
(72) Inventeur: DIMITROVA, Zlatina, 78000 Versailles (FR); ALARCON OLIVEIRA, Anna Luara, 78140 Velizy Villacoublay (FR)
(86) Numéro de dépôt international: PCT/FR2019/052378
(87) Numéro de publication internationale: WO 2020/109678

(56) Documents cités:
- EP-A1- 2 684 733
- US-A1- 2015 246 620
- US-A1- 2017 129 357

## Description

### Domaine technique de l'invention

L'invention concerne la recharge par induction des batteries de véhicules garés sur des emplacements de parking.

### Etat de la technique

Certains parkings (publics ou privés) comprennent au moins un emplacement de parking (ou stationnement) sur lequel peut se garer temporairement un véhicule comprenant une batterie rechargeable, et au moins un système de recharge comprenant une base de contrôle et d'alimentation en courant et un boîtier mobile dit « autonome ».

Le boîtier mobile est dit autonome du fait qu'il comprend des moyens de déplacement chargés de le déplacer de façon autonome sur une surface de roulage par analyse d'images de l'environnement situé au moins devant lui et acquises par au moins un capteur embarqué, et un circuit primaire comportant une bobine primaire alimentée en courant, par un câble d'alimentation connecté à la base, pour transférer par induction de l'énergie électrique à une bobine secondaire faisant partie d'un circuit secondaire équipant un véhicule garé et chargée de transformer de l'énergie électrique transférée en courant de recharge pour la batterie de ce véhicule. On entend ici par « déplacement autonome » un déplacement qui est contrôlé en interne par un calculateur du boîtier mobile afin que ce dernier puisse se rendre d'une position initiale (comme par exemple un lieu de stockage situé à côté de la base) à un endroit situé sous la bobine secondaire d'un véhicule garé sur un emplacement (de parking).

Un inconvénient de ce type de boîtier mobile réside dans le fait qu'il est petit et plat afin de circuler sans difficulté sous les véhicules, et donc qu'il est difficile à détecter, en particulier lorsque l'intensité lumineuse est faible, et par conséquent peut être heurté ou écrasé par une personne ou un véhicule.

Par ailleurs, lorsque l'usager d'un véhicule garé veut lancer une recharge de la batterie de ce dernier, il doit marcher jusqu'à la base afin de lui communiquer manuellement, via une interface homme/machine qu'elle comprend, des informations définissant la recharge, à savoir : sa durée ou le niveau de charge final de la batterie, le type du véhicule (type de batterie et type et hauteur par rapport au sol de la bobine secondaire du véhicule), et l'emplacement sur lequel est garé le véhicule, ainsi qu'éventuellement le niveau de charge en cours de la batterie (lorsqu'il n'est pas fourni directement au boîtier mobile par le circuit secondaire du véhicule). Un tel lancement de recharge est chronophage et fastidieux pour l'usager. De plus, si l'usager n'est pas le conducteur habituel du véhicule, il peut ne pas être en possession de l'une au moins des informations de recharge devant être fournies à la base, comme par exemple le type du véhicule (type de batterie et type et hauteur par rapport au sol de la bobine secondaire), ce qui l'empêche de lancer la recharge.

L'invention a donc notamment pour but de remédier à l'un au moins des inconvénients présentés ci-avant.

Les documents EP 2 684 733 A1, US 2015/246620 A1 et US 2017/129357 A1 divulguent des exemples de procédé de recharge par induction d'une batterie d'un véhicule stationné au moyen d'un boîtier mobile.

### Présentation de l'invention

Elle propose notamment à cet effet un procédé de recharge destiné à permettre la recharge par induction d'une batterie d'un véhicule garé sur un emplacement par un système comprenant un boîtier mobile pouvant se déplacer, par analyse d'images de l'environnement situé au moins devant lui, jusqu'à un endroit choisi du véhicule pour transférer par induction de l'énergie électrique produite à partir d'un courant fourni par un câble d'alimentation, et une base fournissant le courant au câble d'alimentation.

Ce procédé de recharge se caractérise par le fait qu'il comprend :
- une première étape dans laquelle, en cas de réception par le boîtier mobile d'informations définissant la recharge, le boîtier mobile se déplace d'une position initiale jusqu'à un élément de référence associé à l'emplacement sur lequel est garé le véhicule et détectable dans les images d'environnement,
- une deuxième étape dans laquelle le boîtier mobile se déplace de cet élément de référence jusqu'à l'endroit choisi du véhicule en enregistrant au moins une position sur un trajet qu'il suit, puis débute la recharge, et
- une troisième étape dans laquelle, une fois la recharge terminée, le boîtier mobile se déplace jusqu'à l'élément de référence en repassant par chaque position enregistrée, puis jusqu'à la position initiale en se repérant par rapport à cet élément de référence par analyse des images d'environnement.

Ainsi, le boîtier mobile peut se rendre de façon plus sécurisée jusqu'à l'endroit choisi sous le véhicule, via l'élément de référence concerné, ce qui permet de minimiser, voire supprimer, les risques qu'il soit heurté ou écrasé par une personne ou un véhicule.

Le procédé de recharge selon l'invention peut comporter d'autres caractéristiques qui peuvent être prises séparément ou en combinaison, et notamment :
- dans sa première étape le boîtier mobile peut se déplacer après avoir effectué à la position initiale un étalonnage de distance et/ou de forme et/ou de couleur réussi par rapport à un élément de référence ;
   ➢ dans sa première étape le boîtier mobile peut effectuer un étalonnage en déterminant dans au moins une image d'environnement une distance le séparant de l'élément de référence et une forme et une couleur de ce dernier, puis en comparant, d'une première part, la distance déterminée à une distance stockée et associée à cet élément de référence, d'une deuxième part, la forme déterminée à une forme stockée et associée à cet élément de référence, et, d'une troisième part, la couleur déterminée à une couleur de référence stockée et associée à cet élément de référence, et, en cas de correspondance entre les distances déterminée et stockée, entre les formes déterminée et stockée et entre les couleurs déterminée et stockée, en utilisant cette couleur déterminée en tant que couleur de référence de l'élément de référence dans l'analyse des images d'environnement pendant le déplacement jusqu'à l'élément de référence ;
- dans sa première étape les informations définissant la recharge peuvent être représentatives au moins d'une durée de la recharge ou d'un niveau de charge de la batterie en fin de la recharge, d'un niveau de charge en cours de la batterie avant la recharge, de l'emplacement sur lequel est garé le véhicule, et d'un type du véhicule définissant la batterie et un type et une hauteur par rapport au sol de cet emplacement d'une bobine secondaire faisant partie d'un circuit secondaire équipant le véhicule et transformant en courant de recharge pour la batterie de l'énergie électrique transférée par induction par une bobine primaire faisant partie d'un circuit primaire équipant le boîtier mobile et alimenté en courant par le câble d'alimentation ;
- dans sa première étape le boîtier mobile peut considérer qu'il est arrivé à l'élément de référence lorsqu'une distance le séparant de cet élément de référence et déterminée dans une image d'environnement est inférieure à un premier seuil de distance ;
- dans sa deuxième étape le boîtier mobile peut se déplacer jusqu'à l'endroit choisi après avoir dépassé et/ou contourné l'élément de référence ;
- dans sa deuxième étape une fois le boîtier mobile parvenu à l'endroit choisi il peut positionner au moins la bobine primaire à une hauteur qui est fonction du type et de la hauteur par rapport au sol de l'emplacement de la bobine secondaire ;
- dans sa troisième étape le boîtier mobile peut se déplacer jusqu'à l'élément de référence, puis peut dépasser et/ou contourner ce dernier, puis peut se déplacer vers la position initiale en fonction des positions successives par rapport à l'élément de référence déterminées dans des images d'environnement successives, jusqu'à ce que sa position déterminée soit supérieure à un second seuil de distance ;
- dans sa première étape le boîtier mobile peut recevoir, par voie d'ondes en provenance de la base, une partie au moins des informations définissant la recharge, la base ayant préalablement reçu ces dernières informations d'une application logicielle installée dans un équipement électronique communicant par voie d'ondes et utilisé par un usager du véhicule ou dans le véhicule.

L'invention propose également un produit programme d'ordinateur comprenant un jeu d'instructions qui, lorsqu'il est exécuté par des moyens de traitement, est propre à mettre en œuvre un procédé de recharge du type de celui présenté ci-avant pour recharger par induction une batterie d'un véhicule garé sur un emplacement.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement, dans une vue du dessus, une installation de parking comprenant une surface de roulage comportant trois emplacements de parking, sur l'un desquels vient de se garer un véhicule dont la batterie doit être rechargée par induction au moyen d'un exemple de réalisation d'un système de recharge,
[Fig. 2] illustre schématiquement et fonctionnellement, dans une vue du dessus, l'installation de parking de la figure 1 avec le boîtier mobile de son système de recharge en cours de contournement par la droite de l'élément de référence, associé à l'emplacement de parking sur lequel est garé le véhicule, afin d'aller recharger la batterie de ce dernier,
[Fig. 3] illustre schématiquement et fonctionnellement un premier exemple d'architecture du système de recharge des figures 1 et 2,
[Fig. 4] illustre schématiquement et fonctionnellement un deuxième exemple d'architecture du système de recharge des figures 1 et 2,
[Fig. 5] illustre schématiquement et fonctionnellement un troisième exemple d'architecture du système de recharge des figures 1 et 2,
[Fig. 6] illustre schématiquement un exemple d'algorithme mettant en œuvre la première étape d'un procédé de recharge selon l'invention,
[Fig. 7] illustre schématiquement un exemple d'algorithme mettant en œuvre la deuxième étape d'un procédé de recharge selon l'invention, et
[Fig. 8] illustre schématiquement un exemple d'algorithme mettant en œuvre la troisième étape d'un procédé de recharge selon l'invention.

### Description détaillée de l'invention

L'invention a notamment pour but de proposer un procédé de recharge destiné à permettre la recharge par induction d'au moins une batterie BR d'un véhicule V, qui vient de se garer sur un emplacement de parking EPj, au moyen d'un système de recharge SR.

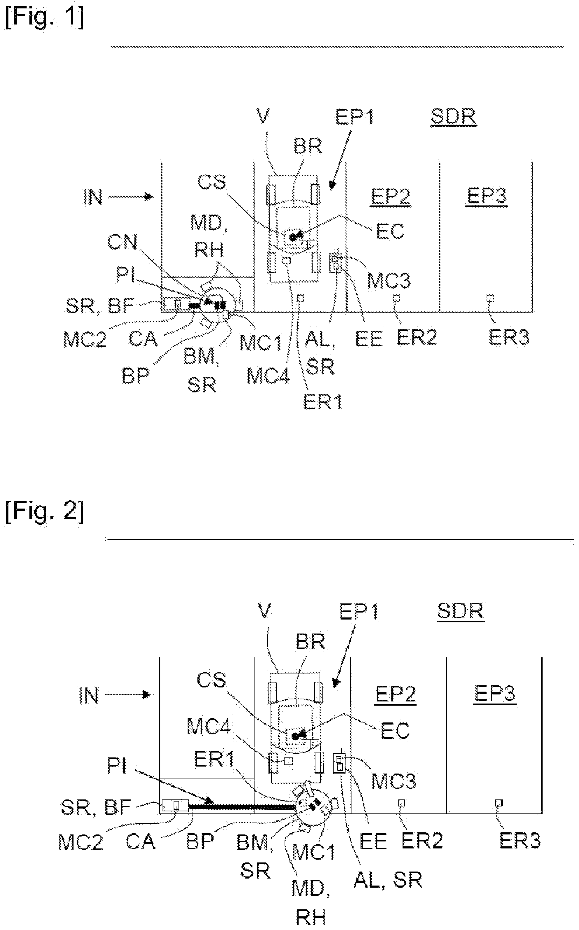

Dans ce qui suit, on considère, à titre d'exemple non limitatif, que le véhicule V, dont la batterie BR doit être rechargée par induction, est de type automobile. Il s'agit par exemple d'une voiture, comme illustré non limitativement sur les figures 1 et 2. Mais l'invention n'est pas limitée à ce type de véhicule. Elle concerne en effet tout type de véhicule comprenant au moins une batterie rechargeable par induction. Par conséquent, elle concerne également les véhicules utilitaires, les cars (ou bus), les camions, les tramways, les engins de chantier, les véhicules agricoles, les engins de voirie, et les aéronefs (et notamment les ULMs (« Ultra Léger Motorisé »), les drones et les hélicoptères).

De plus, on considère dans ce qui suit, à titre d'exemple non limitatif, que le véhicule V comprend un groupe motopropulseur de type tout électrique. Mais le véhicule pourrait comprendre un groupe motopropulseur de type hybride rechargeable, c'est-à-dire comprenant au moins un moteur thermique et au moins une machine motrice électrique couplée à au moins une batterie rechargeable.

Sur les figures 1 et 2 se trouve schématiquement illustrée une installation IN constituant un parking comprenant une surface de roulage SDR comportant trois emplacements de parking EPj (j = 1 à 3). Comme illustré, cette installation IN est équipée d'une partie d'un système de recharge SR, et plus précisément d'une base BF et d'un boîtier mobile BM. Le reste du système de recharge SR comprend au moins une application logicielle AL, sur laquelle on reviendra plus loin.

On notera que l'invention concerne toute surface de roulage SDR sur laquelle peut se déplacer un boîtier mobile BM d'un système de recharge SR, et sur laquelle est défini au moins un emplacement de parking EPj associé à un élément de référence ERj sur lequel on reviendra plus loin. On notera également que la surface de roulage SDR peut être intérieure ou extérieure, publique ou privée. Par conséquent, l'installation IN peut être un espace couvert ou découvert, comme par exemple un parking, un garage, une station de recharge, un bâtiment, une usine, un héliport ou un aérodrome.

Dans l'exemple illustré non limitativement sur les figures 1 et 2, l'installation IN (ici un parking) n'est équipée que d'une seule base BF et d'un seul boîtier mobile BM d'un même système de recharge SR. Mais l'installation IN pourrait être équipée de plusieurs bases BF et plusieurs boîtiers mobiles BM de plusieurs systèmes de recharge SR associés chacun à au moins un emplacement de parking EPj, lui-même associé à un élément de référence ERj.

Comme indiqué précédemment, et comme illustré sur les figures 1 et 2, la mise en œuvre du procédé de recharge selon l'invention nécessite un système de recharge SR comprenant au moins une base BF, un boîtier mobile BM et au moins une application logicielle AL.

Le boîtier mobile BM comprend notamment des moyens de déplacement MD agencés de manière à lui permettre de se déplacer jusqu'à un endroit choisi EC d'un véhicule V venant de se garer et situé dans son champ de déplacement. De plus, ce boîtier mobile BM comporte au moins un circuit primaire chargé de transférer par induction de l'énergie électrique produite à partir d'un courant fourni par un câble d'alimentation CA, et un calculateur (non représenté).

Une partie du circuit primaire, le calculateur et une partie des moyens de déplacement MD sont logés dans un espace interne du boîtier mobile BM.

On notera que cet espace interne peut aussi éventuellement comporter un enrouleur automatique chargé d'enrouler le câble d'alimentation CA, de préférence de façon contrôlée afin qu'il demeure sensiblement tendu pendant les déplacements du boîtier mobile BM. Lorsque le câble d'alimentation CA est sensiblement tendu lors d'un désenroulement comme lors d'un enroulement, il ne repose pas sur le sol (ou de façon minimale), et donc ne constitue pas en mobilité un obstacle pour le boîtier mobile BM. De plus, cela permet de minimiser en permanence la longueur désenroulée du câble d'alimentation CA, et donc d'éviter d'avoir à prévoir une longueur de câble d'alimentation CA beaucoup plus importante que la longueur moyenne des distances parcourues par le boîtier mobile BM.

Mais dans une variante de réalisation l'enrouleur automatique peut faire partie de la base BF décrite plus loin.

Les moyens de déplacement MD du boîtier mobile BM sont agencés de manière à assurer le déplacement de ce dernier (BM) sur la surface de roulage SDR en fonction de commandes déterminées par le calculateur. A cet effet, ils peuvent, par exemple, comprendre des roues RH montées à rotation.

Par exemple, et comme illustré non limitativement sur la figure 1, les moyens de déplacement MD peuvent comprendre au moins trois roues holonomes (ou omnidirectionnelles) RH, éventuellement à galets, entraînées en rotation par des moteurs électriques (non représentés) indépendants les uns des autres. Chaque moteur électrique peut, par exemple, être alimenté en courant par une batterie, de préférence rechargeable, que comprend le boîtier mobile BM (et qui n'est pas représentée). On notera que l'on peut envisager de profiter des phases de recharge des véhicules pour recharger cette batterie via le câble d'alimentation CA qui est alors alimenté en courant.

Le circuit primaire est couplé à une source d'alimentation électrique de la base BF via le câble d'alimentation CA, et est chargé de recharger la batterie rechargeable BR d'un véhicule V garé, une fois que le boîtier mobile BM s'est positionné précisément dessous ce dernier (V), et plus précisément sous un endroit choisi EC où est placée au moins la bobine secondaire d'un circuit secondaire CS de recharge par induction qui est couplé à cette batterie (rechargeable) BR.

La source d'alimentation électrique de la base BF peut être un boîtier mural (permettant de varier l'intensité du courant), par exemple, connecté à un réseau d'alimentation électrique (ou secteur) et chargé de la distribution de l'énergie électrique et de la protection (disjoncteurs, fusibles, protection différentielle), ou bien un réseau d'alimentation électrique (ou secteur).

Le circuit secondaire CS du véhicule V comprend aussi un condensateur associée à sa bobine secondaire, laquelle est propre à transformer de l'énergie électrique, transférée par le circuit primaire du boîtier mobile BM, en courant de recharge pour la batterie BR.

Le circuit primaire comprend une bobine primaire BP, associée à un condensateur, et propre à être alimentée en courant par le câble d'alimentation CA, afin de transférer par induction de l'énergie électrique à la bobine secondaire du circuit secondaire CS du véhicule V, une fois qu'elle a été positionnée précisément sous cette bobine secondaire.

De préférence, la bobine primaire BP du circuit primaire est placée sur la face supérieure (externe) d'une paroi supérieure du boîtier mobile BM.

Le câble d'alimentation CA est couplé au circuit primaire, éventuellement via au moins un circuit électronique et/ou au moins un composant électronique (éventuellement de puissance). Il fait éventuellement partie du boîtier mobile BM, en particulier lorsque ce dernier (BM) comprend un enrouleur automatique. Mais cela n'est pas obligatoire.

Le boîtier mobile BM comprend aussi au moins un capteur CN chargé d'acquérir des images de l'environnement qui est au moins situé devant lui. Chaque capteur CN peut, par exemple, être une caméra numérique, ou un radar ou lidar. Ce qui est important c'est qu'il soit agencé de manière à acquérir dans une zone d'acquisition des images numériques de l'environnement du boîtier mobile BM qui est au moins situé devant ce dernier (BM).

Le calculateur est chargé de déterminer des commandes de déplacement du boîtier mobile BM, pour les moyens de déplacement MD, notamment en fonction de l'environnement qui est défini par les images acquises par chaque capteur CN. Le calculateur comprend notamment des circuits d'analyse qui sont chargés d'analyser les images acquises afin de déterminer la présence d'un élément de référence ERj (associé à un emplacement de parking EPj) ou d'un éventuel obstacle (comme par exemple une roue de véhicule ou un pied d'une personne) dans l'environnement observé, ainsi qu'éventuellement des mouvements d'objets par rapport au boîtier mobile BM. Le calculateur est donc agencé de manière à déterminer des commandes permettant d'éviter chaque obstacle déterminé sur le trajet allant de sa position initiale PI à un endroit choisi EC d'un véhicule V garé et dont la batterie BR doit être rechargée. Il est rappelé que cet endroit choisi EC est situé sous la bobine secondaire du véhicule V garé. Comme on le verra plus loin ce trajet passe obligatoirement autour de l'élément de référence ERj qui est associé à l'emplacement de parking EPj sur lequel est garé le véhicule V à recharger (ici ER1 (j = 1)). On notera que ce trajet peut être déterminé par toute technique connue de l'homme de l'art, et notamment en fonction d'informations définissant la recharge fournies au moins en partie par le véhicule V.

La position initiale PI du boîtier mobile BM peut, par exemple et comme illustré non limitativement sur la figure 1, être située juste à côté de la base BF. Dans ce cas, elle (PI) constitue une position de rangement. Mais cela n'est pas obligatoire.

On notera que les informations définissant la recharge peuvent, par exemple, être représentatives au moins de la durée de la recharge ou du niveau de charge de la batterie BR en fin de la recharge, du niveau de charge en cours de la batterie BR avant la recharge, de l'emplacement de parking EPj sur lequel est garé le véhicule V, et du type du véhicule V qui définit la batterie BR et le type et la hauteur par rapport au sol de l'emplacement de parking EPj de la bobine secondaire du circuit secondaire CS.

On notera que le calculateur peut tenir compte du besoin de maintenir le câble d'alimentation CA sensiblement tendu lorsqu'il détermine les commandes de déplacement pour les moyens de déplacement MD.

On notera également que le boîtier mobile BM peut aussi comprendre une source d'éclairage logée au moins partiellement dans son espace interne. Cette éventuelle source d'éclairage est chargée d'éclairer au moins la zone d'acquisition des images d'environnement, afin que chaque capteur CN puisse acquérir des images suffisamment claires pour que le calculateur puisse déterminer l'environnement au moins devant son boîtier mobile BM, et en particulier un élément de référence ERj. De préférence, une fois que le boîtier mobile BM est parvenu à l'endroit choisi EC, situé sous la bobine secondaire du véhicule V concerné, et que la recharge par induction commence, le calculateur arrête de faire fonctionner l'éventuelle source d'éclairage, afin de ne pas consommer inutilement d'énergie électrique.

On notera que l'éventuelle source d'éclairage est de préférence installée dans une partie avant du boîtier mobile BM, qui est opposée à une partie arrière de ce dernier (BM) à laquelle est solidarisé le câble d'alimentation CA. Cela permet de faciliter le contrôle de la tension du câble d'alimentation CA.

La base BF est agencée de manière à fournir du courant, via sa source d'alimentation électrique, au câble d'alimentation CA auquel est solidarisé le boîtier mobile BM.

L'application logicielle AL est chargée d'initier chaque recharge du véhicule V en déclenchant la fourniture d'une partie au moins des informations définissant la recharge. De préférence, ces informations définissant la recharge sont fournies à la base BF, qui se charge alors de les communiquer (au moins en partie) au boîtier mobile BM.

Cette application logicielle AL peut, par exemple, être installée dans un équipement électronique EE communicant par voie d'ondes et utilisé par un usager du véhicule V garé, ou bien dans le véhicule V. Mais dans une variante, actuellement non préférée, l'application logicielle AL pourrait être installée dans la base BF.

On considère dans ce qui suit, à titre d'exemple illustratif et comme illustré sur les figures 1 et 2, que l'application logicielle AL est installée dans un équipement électronique EE mobile, communicant par voie d'ondes et utilisé par l'usager du véhicule V garé. Cet équipement électronique EE mobile peut, par exemple, être un téléphone mobile intelligent (ou « smartphone ») ou une tablette électronique comportant un écran d'affichage. On considère également dans ce qui suit, à titre d'exemple illustratif et comme illustré sur les figures 1 et 2, que la base BF et le boîtier mobile BM échangent des informations définissant la recharge par voie d'ondes. En présence de ces deux considérations illustratives, le boîtier mobile BM comprend un premier module de communication MC1 couplé à son calculateur et agencé de manière à échanger par voies d'ondes des informations définissant la recharge du véhicule V, la base BF comprend un deuxième module de communication MC2 couplé à son calculateur et agencé de manière à échanger par voies d'ondes des informations définissant la recharge du véhicule V, et l'équipement électronique EE comprend un troisième module de communication MC3 agencé de manière à échanger par voie d'ondes des informations définissant la recharge du véhicule V. L'usager du véhicule V peut ainsi déclencher à distance une recharge au moyen de l'équipement électronique EE qu'il transporte sans avoir besoin de se déplacer jusqu'à la base BF, et il n'a plus à fournir manuellement à cet équipement électronique EE, via une interface homme/machine qu'il comprend, qu'au moins la durée de la recharge ou le niveau de charge de la batterie BR qu'il souhaite. Les autres informations de recharge (comme par exemple le niveau de charge en cours de la batterie BR avant la recharge, et le type du véhicule V (définissant la batterie BR et le type et la hauteur par rapport au sol de la bobine secondaire)) sont en effet connues par l'équipement électronique EE et le véhicule V. Pour ce qui concerne l'emplacement de parking EPj du véhicule V, il peut être soit connu par l'équipement électronique EE ou le véhicule V, soit communiqué par l'usager du véhicule V à l'application logicielle AL.

Lorsque l'application logicielle AL est installée dans un équipement électronique EE mobile et comportant le troisième module de communication MC3, l'application logicielle AL est chargée d'initier la recharge du véhicule V en déclenchant la fourniture par voie d'ondes à la base BF (par ce troisième module de communication MC3) d'informations de recharge qui sont représentatives au moins de la durée de la recharge souhaitée ou du niveau de charge souhaité de la batterie BR, du type du véhicule V et de l'emplacement de parking EPj sur lequel est garé le véhicule V (ici EP1). Dans ce cas, deux architectures du système de recharge SR peuvent être envisagés.

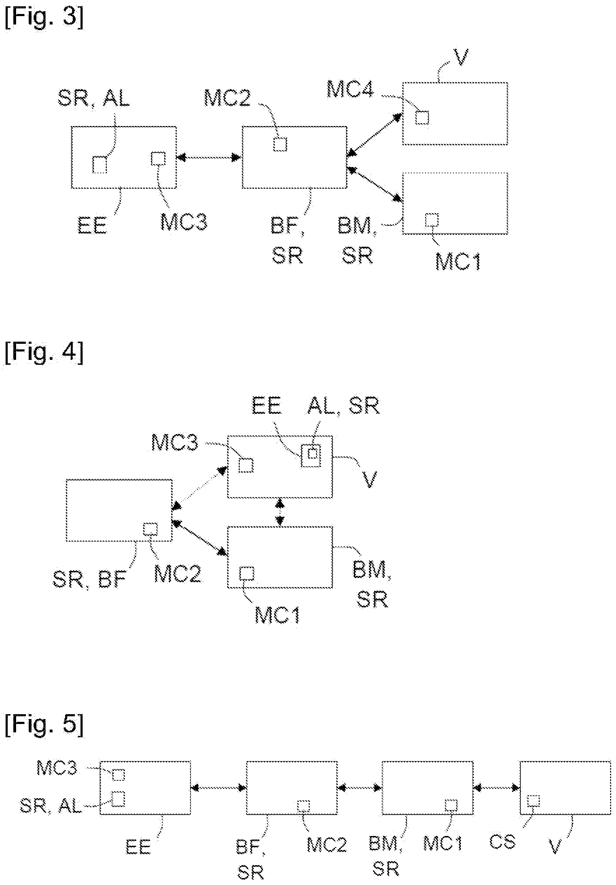

Dans une première architecture dite parallèle et illustrée sur la figure 3, la base BF peut recevoir par voie d'ondes du véhicule V, via un quatrième module de communication MC4 qu'il comprend, une information de recharge qui est représentative du niveau de charge en cours de la batterie BR. La base BF transmet alors toutes les informations de recharge par voie d'ondes au boîtier mobile BM.

Dans une deuxième architecture dite série et illustrée sur la figure 4, le boîtier mobile BM reçoit du circuit secondaire CS du véhicule V l'information de recharge qui est représentative du niveau de charge en cours de la batterie BR, et reçoit toutes les autres informations de recharge de la base BF, laquelle les a reçues de l'équipement électronique EE mobile.

Lorsque l'application logicielle AL est installée dans un équipement électronique EE équipant le véhicule V, ce dernier (V) doit comprendre le troisième module de communication MC3, comme illustré sur la figure 5. Le système de recharge SR présente alors une troisième architecture dans laquelle l'application logicielle AL est chargée d'initier la recharge du véhicule V en déclenchant la fourniture par voie d'ondes à la base BF (via le troisième module de communication MC3) d'informations de recharge qui sont représentatives de la durée de la recharge souhaitée ou du niveau de charge souhaité de la batterie BR, du niveau de charge en cours de la batterie BR, du type du véhicule V, et de l'emplacement de parking EPj sur lequel est garé le véhicule V (ici EP1). De son côté la base BF est chargée de transmettre par voie d'ondes au boîtier mobile BM (via son deuxième module de communication MC2) une partie au moins des informations de recharge qu'elle a reçues. On est donc ici dans une architecture série puisqu'il y a échange entre le véhicule V et la base BF, et entre cette dernière (BF) et le boîtier mobile BM.

Dans une variante de réalisation, l'application logicielle AL peut être chargée d'initier la recharge du véhicule V en déclenchant la fourniture par voie d'ondes à la base BF (via le troisième module de communication MC3) d'informations de recharge qui sont représentatives de la durée de la recharge souhaitée ou du niveau de charge souhaité de la batterie BR, du type du véhicule V, et de l'emplacement de parking EPj sur lequel est garé le véhicule V (ici EP1). De plus, l'application logicielle AL est chargée de déclencher la fourniture par voie d'ondes au boîtier mobile BM (via le troisième module de communication MC3) des informations de recharge qui sont représentatives du niveau de charge en cours de la batterie BR. On est donc ici dans une architecture parallèle puisqu'il y a échange entre, d'une part, le véhicule V, et, d'autre part, la base BF et le boîtier mobile BM.

Lorsque l'application logicielle AL est installée dans un équipement électronique EE faisant partie du véhicule V de façon permanente, cet équipement électronique EE peut, par exemple être l'afficheur central (ou combiné central) qui peut être installé dans ou sur la planche de bord ou la console centrale du véhicule V.

Par exemple, les échanges par voie d'ondes entre les premier MC1, deuxième MC2 et troisième MC3 modules de communication peuvent se faire en WiFi selon un protocole appelé Message Queue Telemetry Transport (ou MQTT). Mais tout autre protocole connu de l'homme de l'art, et permettant des communications à courte distance, peut être utilisé. Ainsi, on pourra, par exemple, communiquer par Bluetooth^{®}.

On notera que pour les échanges par voie d'ondes entre les premier MC1, deuxième MC2 et troisième MC3 modules de communication on peut aussi utiliser un protocole cryptographique destiné à assurer la sécurité des transferts de données. Par exemple, ce protocole cryptographique peut être celui qui est appelé TLS (« Transport Layer Security »).

On notera également que le boîtier mobile BM peut aussi comprendre en complément de son calculateur (comportant les circuits d'analyse), un premier contrôleur agencé de manière à contrôler les communications via son premier module de communication MC1 et les circuits d'analyse, et un second contrôleur agencé de manière à contrôler ses déplacements en fonction d'informations de position. Ces informations de position peuvent, par exemple, être fournies par les circuits d'analyse couplés au capteur CN, et permettent au boîtier mobile BM de se repérer notamment par rapport à sa base BF, aux éléments de référence ERj et à l'endroit choisi EC. Par exemple, le second contrôleur contrôle les moyens de déplacement MD du boîtier mobile BM en fonction d'informations de position qui sont représentatives de la distance séparant les bobines primaire BP et secondaire et qui sont fournies par les circuits d'analyse.

A titre d'exemple purement illustratif le premier contrôleur peut, par exemple, être de type Raspberry Pi. De même, à titre d'exemple purement illustratif le second contrôleur peut, par exemple, être de type Arduino.

Par exemple, les premier et second contrôleurs peuvent être agencés de manière à communiquer entre eux selon un protocole appelé Inter-Integrated Circuit (ou I2C). Mais tout autre protocole connu de l'homme de l'art, et permettant des communications entre contrôleurs, peut être utilisé.

Le premier contrôleur communique de préférence dans un mode « maître-esclave » avec le second contrôleur (qui est alors l'esclave). Il est rappelé que le protocole I2C utilise deux « lignes » principales pour effectuer ses communications : l'une appelée SDA (« Serial Data ») et l'autre appelée SCL (« Serial Clock »). La ligne SDA est responsable de l'envoi des données et la ligne SCL fournit l'horloge qui est utilisée pour la synchronisation. Par ailleurs, la ligne SDA est bidirectionnelle et envoie un octet (ou « byte ») par message. De ce fait, afin de ne pas envoyer trop de messages de commandes (octet après octet), le premier contrôleur peut, par exemple, utiliser une table de correspondance lettres/commandes.

De même, afin de ne pas envoyer trop de messages (octet après octet), le second contrôleur peut, par exemple, utiliser une table de correspondance lettres/réponses.

Avec des tables de correspondance de ces types il est plus facile pour le premier contrôleur de traiter les messages provenant du second contrôleur, car il n'y a que des comparaisons de valeurs à effectuer.

De nombreux algorithmes de traitement de message de commande peuvent être mis en œuvre dans le second contrôleur afin que ce dernier comprenne très rapidement chaque commande définie dans un message, puis de l'exécuter. Lorsqu'une commande nécessite plusieurs valeurs pour être entièrement définie, une fois que l'une de ces commandes est reçue, une variable « n » peut, par exemple, être utilisée pour compter chacune des valeurs nécessaires, et ainsi détecter lorsqu'elles ont toutes été reçues. Si une valeur inattendue est reçue, le second contrôleur envoie au premier contrôleur un message d'erreur et déclenche l'arrêt du déplacement du boîtier mobile BM dans l'attente d'une nouvelle commande.

On notera également que la base BF peut dans certains modes de réalisation servir de serveur pour les messages issus de/destinés à l'application logicielle AL ou au boîtier mobile BM. Dans ce cas, la base BF peut, par exemple, fonctionner selon un mode bien connu de l'homme de l'art et appelé éditeur/abonné (ou « publisher/subscriber ») pour échanger les messages. La base BF est alors responsable de la réception, de la mise en file d'attente et du renvoi des messages reçus des éditeurs vers les abonnés.

Dans ce cas, le boîtier mobile BM et l'application logicielle AL sont à la fois éditeur et abonné. Chaque connexion (pour une communication) est faite en utilisant un login, avec un nom d'utilisateur, un mot de passe et un éventuel cryptage de type TLS.

Si une autre application logicielle AL demande la recharge d'un autre véhicule et que le boîtier mobile BM est en cours d'utilisation, cette autre application logicielle recevra un message comportant le temps d'attente pour commencer la recharge de l'autre véhicule.

On notera également que tous les moyens de traitement et de calcul, embarqués dans le boîtier mobile BM et chargés d'analyser les images et de déterminer les commandes de déplacement, ont été très schématiquement désignés dans ce qui précède sous les noms de calculateur et d'éventuels contrôleurs. Mais ces moyens de traitement et de calcul peuvent comprendre des circuits intégrés (ou imprimés), éventuellement reliés par des connections filaires ou non filaires, et faisant partie d'un ou plusieurs processeurs. On entend par circuit intégré (ou imprimé) tout type de dispositif apte à effectuer au moins une opération électrique ou électronique. Par ailleurs, le calculateur comprend par exemple au moins un processeur de signal numérique (ou DSP (« Digital Signal Processor »)), associé à une mémoire vive stockant des instructions pour la mise en œuvre de routine(s) ou programme(s) informatique(s), et éventuellement à une mémoire de masse pour le stockage de données destinées à être conservées pendant et après une recharge par induction. Le processeur de signal numérique reçoit au moins les images numériques acquises par chaque capteur CN et des informations de recharge fournies par la base BF et/ou le véhicule V concerné, pour les analyser et éventuellement les utiliser dans des calculs, éventuellement après les avoir mises en forme et/ou démodulées et/ou amplifiées, de façon connue en soi. On entend donc ici par calculateur une combinaison de circuits électroniques (ou « hardware ») et de modules logiciels (ou informatiques ou encore « software »). Le boîtier mobile BM peut également comporter une interface d'entrée pour la réception d'au moins des informations de recharge, et une interface de sortie, notamment pour l'envoi de messages à la base BF et/ou au véhicule V.

On notera également que tous les moyens de traitement et de calcul, embarqués dans la base BF et chargés de contrôler la recharge, ont été très schématiquement désignés dans ce qui précède sous les noms de calculateur et d'éventuel contrôleur. Mais ces moyens de traitement et de calcul peuvent comprendre des circuits intégrés (ou imprimés), éventuellement reliés par des connections filaires ou non filaires, et faisant partie d'un ou plusieurs processeurs. Par ailleurs, le calculateur comprend par exemple au moins un processeur de signal numérique associé à une mémoire vive stockant des instructions pour la mise en œuvre de routine(s) ou programme(s) informatique(s), et éventuellement à une mémoire de masse pour le stockage de données destinées à être conservées pendant et après une recharge par induction. Le processeur de signal numérique reçoit au moins les informations de recharge fournies par l'application logicielle AL et/ou le boîtier mobile BM et/ou le véhicule V concerné, pour les analyser et éventuellement les utiliser dans des calculs ou traitements, éventuellement après les avoir mises en forme et/ou démodulées et/ou amplifiées, de façon connue en soi. On entend donc ici par calculateur une combinaison de circuits électroniques et de modules logiciels. La base BF peut également comporter une interface d'entrée pour la réception d'au moins les éventuelles informations de recharge, et une interface de sortie, notamment pour l'envoi de messages au boîtier mobile BM et/ou à l'application logicielle AL et/ou au véhicule V.

Le procédé de recharge, selon l'invention, est destiné à permettre la recharge par induction de la batterie BR du véhicule V qui est garé sur l'emplacement EPj (ici EP1) de l'installation IN par le système de recharge SR décrit ci-avant en référence aux figures 1 à 5. Il comprend à cet effet des première 10-110, deuxième 120-190 et troisième 200-250 étapes qui peuvent être mises en œuvre par ce système de recharge SR. Il est rappelé que le système (de recharge) SR comprend au moins un boîtier mobile BM pouvant se déplacer, par analyse d'images de l'environnement situé au moins devant lui, jusqu'à un endroit choisi EC du véhicule V pour transférer par induction de l'énergie électrique produite à partir d'un courant fourni par un câble d'alimentation CA, et une base BF fournissant ce courant au câble d'alimentation CA.

La première étape 10-110 du procédé (de recharge) débute lorsque le boîtier mobile BM reçoit des informations définissant une recharge de la batterie BR d'un véhicule V garé sur un emplacement de parking EPj associé à un élément de référence ERj.

Chaque élément de référence ERj de l'installation IN est installé fixement en une position connue par rapport à un référentiel fixe. Dans l'exemple illustré non limitativement sur les figures 1 et 2, les éléments de référence ERj sont installés fixement et respectivement sur les emplacements de parking EPj qui leurs sont respectivement associés (ici au voisinage d'une extrémité). Par exemple, ils (ERj) peuvent être installés dans une position médiane (ou centrale) au voisinage de l'une des extrémités opposées de l'emplacement de parking EPj associé. Mais ils pourraient être installés à côté des emplacements de parking EPj qui leurs sont respectivement associés.

Chaque élément de référence ERj peut être bidimensionnel (2D) ou tridimensionnel (3D), l'important étant qu'il puisse être détecté dans les images acquises par le capteur CN embarqué par le boîtier mobile BM. Lorsqu'il est bidimensionnel (2D) il peut se présenter sous la forme d'un autocollant ou d'une marque peinte, par exemple. Lorsqu'il est tridimensionnel (3D) il peut se présenter sous la forme d'un plot ou d'une borne, par exemple. De préférence, chaque élément de référence ERj présente une forme prédéfinie et une couleur prédéfinie dont les définitions sont stockées dans le boîtier mobile BM en correspondance, par exemple, de la distance qui le sépare du boîtier mobile BM (et plus précisément de son capteur CN) lorsqu'il est placé dans sa position initiale PI. Cette option est destinée à faciliter la détection d'un élément de référence ERj dans les images d'environnement acquises par le capteur CN.

Dans la première étape 10-110 le boîtier mobile BM se déplace de sa position initiale PI jusqu'à l'élément de référence ERj qui est associé à l'emplacement de parking EPj sur lequel est garé le véhicule V (ici EP1) et qui est détectable dans les images d'environnement acquises par le capteur CN même avec un faible éclairage. La position du boîtier mobile BM après ce déplacement est matérialisée sur la figure 2. On notera que chaque élément de référence ERj pourrait éventuellement émettre une lumière spécifique afin de constituer une espèce de balise lumineuse.

Dans la deuxième étape 120-190 du procédé le boîtier mobile BM se déplace de cet élément de référence ERj (ici ER1) jusqu'à l'endroit choisi EC du véhicule V en enregistrant au moins une position (et de préférence plusieurs (au moins deux)) sur le trajet (aller) qu'il suit, puis le boîtier mobile BM débute la recharge de la batterie BR du véhicule V. Ce déplacement du boîtier mobile BM vers l'endroit choisi EC est matérialisé par la flèche de la figure 2.

Dans la troisième étape 200-250, une fois la recharge terminée, le boîtier mobile BM se déplace jusqu'à l'élément de référence ERj en repassant par chaque position qu'il a préalablement enregistrée, puis jusqu'à sa position initiale PI en se repérant par rapport à l'élément de référence ERj (ici ER1) par analyse des images d'environnement acquises par le capteur CN.

Le boîtier mobile BM se sert donc des images acquises en direct pour se déplacer dans les première 10-110 et deuxième 120-190 étapes sur son trajet « aller » (à savoir de sa position initiale PI jusqu'à l'endroit choisi EC de recharge, via l'élément de référence ERj (en visibilité du capteur CN)). Puis, le boîtier mobile BM se sert des positions enregistrées sur le trajet aller pour se déplacer dans la première partie de la troisième étape 200-250 sur son trajet « retour » (à savoir de l'endroit choisi EC de recharge jusqu'à l'élément de référence ERj (qui ne peut pas être vu par le capteur CN)). Enfin, le boîtier mobile BM se sert de nouveau des images acquises en direct pour se déplacer dans la seconde partie de la troisième étape 200-250 sur son trajet retour (à savoir de l'élément de référence ERj (de nouveau en visibilité du capteur CN ) jusqu'à sa position initiale PI).

Le boîtier mobile BM peut ainsi se rendre de façon plus sécurisée jusqu'à l'endroit choisi sous le véhicule, via l'élément de référence ERj concerné. Il en résulte une minimisation, voire une suppression, des risques qu'il soit heurté ou écrasé par une personne ou un véhicule, en particulier lorsque l'intensité lumineuse est faible.

De préférence, dans la première étape 10-110 le boîtier mobile BM peut se déplacer après avoir effectué à sa position initiale PI un étalonnage de distance et/ou de forme et/ou de couleur réussi par rapport à un élément de référence ERj. Cet élément de référence ERj n'est pas forcément celui qui est associé à l'emplacement de parking EPj sur lequel est garé le véhicule V (ici EP1). Par exemple, il peut s'agir de celui qui est situé le plus près de la position initiale PI. Cet étalonnage préliminaire est destiné à optimiser la détection de l'élément de référence ERj associé à l'emplacement de parking EPj dans les images acquises par le capteur CN, en particulier dans les environnements où l'éclairement des emplacements de parking EPj est variable et/ou relativement faible.

Par exemple, dans la première étape 10-110 le boîtier mobile BM peut effectuer un étalonnage en trois phases. Dans une première phase le boîtier mobile BM peut déterminer dans au moins une image d'environnement la distance qui le sépare de l'élément de référence ERj (choisi ou imposé pour l'étalonnage) et la forme et la couleur de ce dernier (ERj). Puis, dans une deuxième phase le boîtier mobile BM peut comparer, d'une première part, la distance déterminée à la distance qu'il stocke et qui est associée à cet élément de référence ERj, d'une deuxième part, la forme déterminée à la forme qu'il stocke et qui est associée à cet élément de référence ERj, et, d'une troisième part, la couleur déterminée à la couleur de référence qu'il stocke et qui est associée à cet élément de référence ERj. Enfin, dans une troisième phase le boîtier mobile BM peut, en cas de correspondance entre les distances déterminée et stockée, entre les formes déterminée et stockée et entre les couleurs déterminée et stockée, utiliser la couleur déterminée en tant que couleur de référence de l'élément de référence ERj (associé à l'emplacement de parking EPj sur lequel est garé le véhicule V (ici EP1)) dans l'analyse des images d'environnement qu'il effectue pendant son déplacement jusqu'à cet élément de référence ERj (durant la première étape 10-110).

On notera que dans la première étape 10-110 le boîtier mobile BM peut considérer qu'il est arrivé à l'élément de référence ERj lorsque la distance d1(BM, ERj), qui le sépare de l'élément de référence ERj et qu'il a déterminée dans une image d'environnement acquise par le capteur CN, est inférieure à un premier seuil de distance s1 (soit d1(BM, ERj) < s1).

A titre d'exemple, ce premier seuil de distance s1 peut être compris entre 40 cm et 60 cm. Ainsi, s1 peut, par exemple, être choisi égal à 50 cm.

On notera également que dans la première étape 10-110, lorsque le système de recharge SR présente l'une des trois architectures (illustrées respectivement sur les figures 3 à 5), le boîtier mobile BM peut recevoir, par voie d'ondes en provenance de la base BF, une partie au moins des informations définissant la recharge, la base BF ayant préalablement reçu ces dernières informations d'une application logicielle AL, installée dans un équipement électronique EE communicant par voie d'ondes et utilisé par l'usager du véhicule V ou dans le véhicule V.

On notera également que dans la deuxième étape 120-190 le boîtier mobile BM peut se déplacer jusqu'à l'endroit choisi EC après avoir dépassé et/ou contourné l'élément de référence ERj concerné (ici ER1), comme illustré non limitativement sur la figure 2. Plus précisément, dans l'exemple illustré non limitativement sur la figure 2, le boîtier mobile BM arrive par la gauche au niveau de l'élément de référence ER1, puis dépasse ce dernier (ER1) afin de le contourner par la droite (avant de se diriger vers l'endroit choisi EC (dans la deuxième étape (120-190)).

En présence de cette dernière option, dans la deuxième étape 120-190 une fois que le boîtier mobile BM est parvenu à l'endroit choisi EC il peut positionner au moins la bobine primaire BP de son circuit primaire à une hauteur qui est fonction du type et de la hauteur par rapport au sol de l'emplacement de parking EPj (ici EP1) de la bobine secondaire. Cette option nécessite que le boîtier mobile BM soit installé sur une plate-forme translatable suivant la direction verticale, par exemple par une vis sans fin ou un élévateur couplé à un moteur électrique. Par ailleurs, cette option permet d'optimiser la recharge grâce au contrôle précis de la distance verticale séparant les bobines primaire BP et secondaire.

On notera également que dans la troisième étape 200-250 le boîtier mobile BM peut se déplacer jusqu'à l'élément de référence ERj concerné, puis peut dépasser et/ou contourner ce dernier (ERj), puis peut se déplacer vers la position initiale PI en fonction de ses positions successives par rapport à cet élément de référence ERj qu'il détermine dans des images d'environnement successives acquises par le capteur CN, jusqu'à ce que sa position déterminée p(BM, ERj) soit supérieure à un second seuil de distance s2j (soit p(BM, ERj) > s2j). Plus précisément, dans l'exemple illustré non limitativement sur la figure 2, le boîtier mobile BM arrive par la droite au niveau de l'élément de référence ER1, puis dépasse ce dernier (ER1) afin de le contourner (avant de se diriger vers sa position initiale PI (dans la troisième étape (200-250)).

On comprendra que ce second seuil de distance s2j dépend de la distance séparant la position initiale PI et l'élément de référence ERj concerné par le contournement.

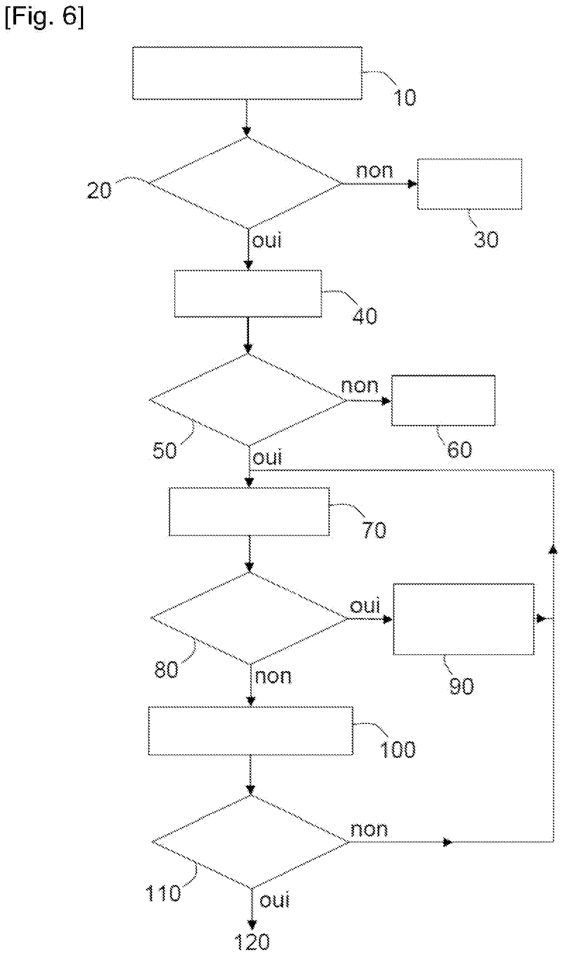

On a schématiquement illustré sur la figure 6 un exemple d'algorithme mettant en œuvre la première étape 10-110 du procédé de recharge décrit ci-avant.

Dans une première sous-étape 10 de la première étape 10-110 on (l'équipement électronique EE mobile de l'usager du véhicule V, qui vient d'être garé sur un emplacement de parking EPj (par exemple EP1), à la demande de son application logicielle AL) transmet une demande de recharge contenant des informations définissant la recharge de la batterie BR de ce véhicule V. Par exemple, cette transmission se fait à destination de la base BF.

Dans une deuxième sous-étape 20 de la première étape 10-110 on (la base BF) vérifie si cette demande de recharge reçue est conforme (c'est-à-dire si l'usager est abonné et donc autorisé à la faire, si elle comporte toutes les informations de recharge nécessaires à la recharge demandée, et si toutes ces informations de recharge sont cohérentes).

Dans la négative (« non »), on (la base BF) génère une alarme à destination de l'équipement électronique EE mobile dans une troisième sous-étape 30 de la première étape 10-110. Cette alarme est destinée à signaler à l'usager l'existence d'au moins un problème, de préférence identifié, dans sa demande de recharge.

En revanche, dans l'affirmative (« oui »), on (la base BF) transmet, dans une quatrième sous-étape 40 de la première étape 10-110, certaines au moins des informations de recharge reçues au boîtier mobile BM, par exemple par voie d'ondes. Puis, on (le boîtier mobile BM) effectue à sa position initiale PI un étalonnage de distance et/ou de forme et/ou de couleur par rapport à un élément de référence ERj de l'installation IN.

Dans une cinquième sous-étape 50 de la première étape 10-110 on (le boîtier mobile BM) détermine si cet étalonnage est réussi (et donc si toutes les correspondances de forme, couleur et distance sont satisfaites).

Dans la négative (« non »), on (le boîtier mobile BM) génère une alarme à destination de l'équipement électronique EE mobile (éventuellement via la base BF) dans une sixième sous-étape 60 de la première étape 10-110. Cette alarme est destinée à signaler à l'usager l'impossibilité de réaliser l'étalonnage.

En revanche, dans l'affirmative (« oui »), on (le boîtier mobile BM) commence à contrôler son déplacement de façon autonome en direction de l'élément de référence ER1 qui est associé à l'emplacement de parking EP1 sur lequel est garé le véhicule V, dans une septième sous-étape 70 de la première étape 10-110.

Pendant ce déplacement on (le boîtier mobile BM) détermine dans les images acquises par son capteur CN s'il y a un obstacle sur son trajet aller vers l'élément de référence ER1, dans une huitième sous-étape 80 de la première étape 10-110.

Dans l'affirmative (« oui »), on (le boîtier mobile BM) gère le contournement de cet obstacle déterminé, dans une neuvième sous-étape 90 de la première étape 10-110. Puis, on (le boîtier mobile BM) réitère la septième sous-étape 70 de la première étape 10-110 afin de poursuivre le contrôle du déplacement sur le trajet aller.

En revanche, dans la négative (« non »), on (le boîtier mobile BM) poursuit le contrôle du déplacement sur le trajet aller et détermine dans les images acquises par son capteur CN la distance d1(BM, ER1) qui sépare le boîtier mobile BM de l'élément de référence ER1, dans une dixième sous-étape 100 de la première étape 10-110.

Puis, on (le boîtier mobile BM) détermine si cette distance d1(BM, ER1) est inférieure au premier seuil de distance s1 (soit d1(BM, ER1) < s1), dans une onzième sous-étape 110 de la première étape 10-110. Dans la négative (« non »), on (le boîtier mobile BM) recommence la septième sous-étape 70 de la première étape 10-110 afin de poursuivre le contrôle de son déplacement sur son trajet aller. En revanche, dans l'affirmative (« oui »), on (le boîtier mobile BM) considère que ce dernier (BM) est parvenu au niveau de l'élément de référence ER1, et donc on (le boîtier mobile BM) commence la deuxième étape 120-190 décrite ci-après à titre d'exemple.

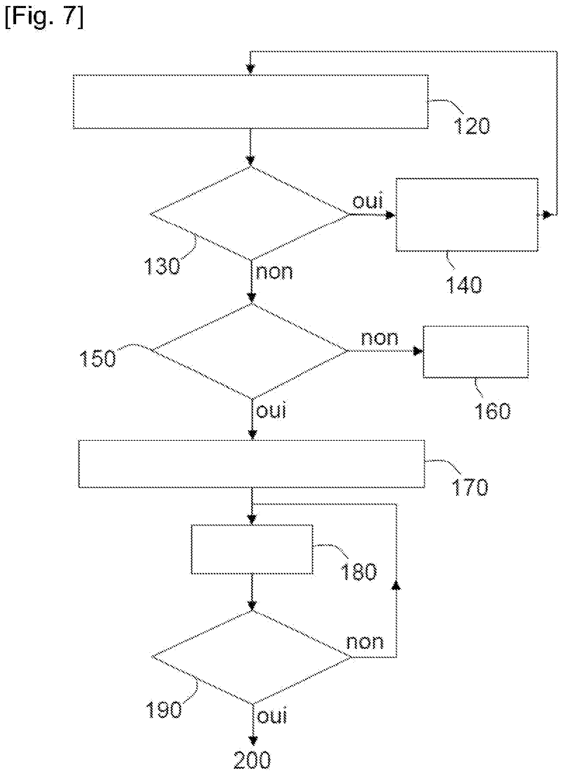

On a schématiquement illustré sur la figure 7 un exemple d'algorithme mettant en œuvre la deuxième étape 120-190 du procédé de recharge décrit ci-avant.

Dans une douzième sous-étape 120 de la deuxième étape 120-190 on (le boîtier mobile BM) contrôle le contournement de l'élément de référence ER1 (ici par la droite) puis le déplacement de façon autonome en direction de l'endroit choisi EC du véhicule V garé sur l'emplacement de parking EP1. Pendant ce déplacement on (le boîtier mobile BM) enregistre certaines au moins de ses positions successives par rapport à l'élément de référence ER1.

Egalement pendant ce déplacement on (le boîtier mobile BM) détermine dans les images acquises par son capteur CN s'il y a un obstacle sur son trajet aller vers l'endroit choisi EC du véhicule V, dans une treizième sous-étape 130 de la deuxième étape 120-190.

Dans l'affirmative (« oui »), on (le boîtier mobile BM) gère le contournement de cet obstacle déterminé, dans une quatorzième sous-étape 140 de la deuxième étape 120-190. Puis, on (le boîtier mobile BM) réitère partiellement la douzième sous-étape 120 afin de poursuivre le contrôle du déplacement sur le trajet aller.

En revanche, dans la négative (« non »), on (le boîtier mobile BM) poursuit le contrôle du déplacement sur le trajet aller et détermine dans les images acquises par son capteur CN s'il est parvenu au niveau de l'endroit choisi EC (et donc si sa position finale est correcte), dans une quinzième sous-étape 150 de la deuxième étape 120-190. Dans la négative (« non »), on (le boîtier mobile BM) génère une alarme à destination de l'équipement électronique EE mobile dans une seizième sous-étape 160 de la deuxième étape 120-190. Cette alarme est destinée à signaler à l'usager l'existence d'un problème de positionnement du boîtier mobile BM sous le véhicule V qui empêche la recharge.

En revanche, dans l'affirmative (« oui »), on (le boîtier mobile BM) contrôle le positionnement (et plus précisément la distance verticale) de la bobine primaire BP sous la bobine secondaire du véhicule V, dans une dixseptième sous-étape 170 de la deuxième étape 120-190. Ce positionnement est destiné à placer la bobine primaire BP à une distance verticale de la bobine secondaire qui est optimale compte tenu du type de cette dernière.

Puis, dans une dix-huitième sous-étape 180 de la deuxième étape 120-190 on (le boîtier mobile BM) commence la recharge.

Puis, dans une dix-neuvième sous-étape 190 de la deuxième étape 120-190 on (le boîtier mobile BM) détermine si la recharge est terminée. Cela peut résulter soit du fait que la durée de la recharge souhaitée par l'usager est écoulée ou que le niveau de charge final de la batterie BR souhaité par l'usager est atteint, soit de la réception par le boîtier mobile BM d'une demande d'interruption de la recharge en provenance de l'équipement électronique EE (demande de l'usager) ou de la base BF (problème d'alimentation).

Dans la négative (« non »), on (le boîtier mobile BM) poursuit la recharge en poursuivant la dix-huitième sous-étape 180. En revanche, dans l'affirmative (« oui »), on (le boîtier mobile BM) commence la troisième étape 200-250 décrite ci-après à titre d'exemple.

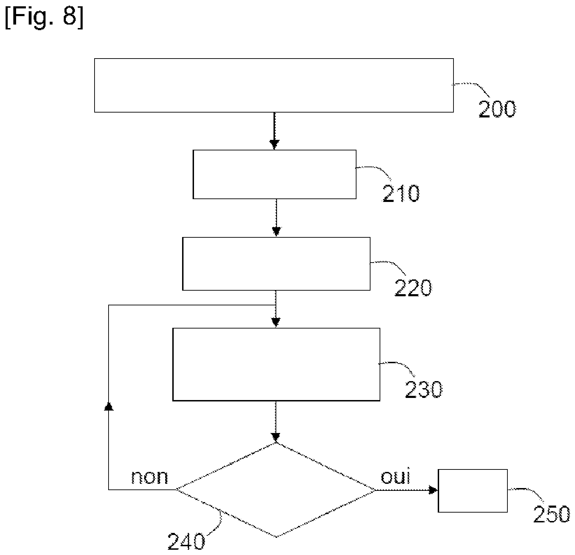

On a schématiquement illustré sur la figure 8 un exemple d'algorithme mettant en œuvre la troisième étape 200-250 du procédé de recharge décrit ci-avant.

Dans une vingtième sous-étape 200 de la troisième étape 200-250, on (le boîtier mobile BM) contrôle le replacement de la bobine primaire BP dans sa position initiale (rentrée).

Puis, dans une vingt-et-unième sous-étape 210 de la troisième étape 200-250, on (le boîtier mobile BM) contrôle le déplacement de ce dernier (BM) sur une première partie du trajet retour en direction de l'élément de référence ER1. Ce déplacement se fait en repassant par les positions qui ont été enregistrées pendant la seconde partie du trajet aller (entre l'élément de référence ER1 et l'endroit choisi EC).

Puis, dans une vingt-deuxième sous-étape 220 de la troisième étape 200-250, on (le boîtier mobile BM) contrôle le contournement par ce dernier (BM) de l'élément de référence ER1 (ici par la droite).

Puis, dans une vingt-troisième sous-étape 230 de la troisième étape 200-250, on (le boîtier mobile BM) contrôle le déplacement de ce dernier (BM) sur la seconde partie de son trajet retour en direction de sa position initiale PI. Ce déplacement vers la position initiale PI se fait en repérant le boîtier mobile BM par rapport à l'élément de référence ER1 par analyse des images d'environnement acquises par le capteur CN.

Pendant ce déplacement on (le boîtier mobile BM) détermine dans les images acquises par son capteur CN la position (ou distance) p(BM, ER1) qui sépare le boîtier mobile BM de l'élément de référence ER1.

Egalement pendant ce déplacement on (le boîtier mobile BM) détermine si chaque position (ou distance) déterminée p(BM, ER1) est supérieure au second seuil de distance s21 (soit p(BM, ER1) > s21), dans une vingt-quatrième sous-étape 240 de la troisième étape 200-250.

Dans la négative (« non »), on (le boîtier mobile BM) poursuit le contrôle du déplacement de ce dernier (BM) sur la seconde partie de son trajet retour en direction de sa position initiale PI, en réitérant la vingt-troisième sous-étape 230. En revanche, dans l'affirmative (« oui »), on (le boîtier mobile BM) considère que ce dernier (BM) est revenu à sa position initiale PI, et donc la troisième étape 200-250 prend fin.

On notera que l'invention propose aussi un produit programme d'ordinateur comprenant un jeu d'instructions qui, lorsqu'il est exécuté par des moyens de traitement de type circuits électroniques (ou hardware), est propre à mettre en œuvre le procédé de recharge décrit ci-avant pour recharger par induction la batterie BR du véhicule V qui est garé sur un emplacement de parking EPj de l'installation IN. On comprendra que ce produit programme d'ordinateur est réparti dans le boîtier mobile BM, la base BF et chaque application logicielle AL du système de recharge SR.

## Revendications

1. Procédé de recharge par induction d'une batterie (BR) d'un véhicule (V) garé sur un emplacement (EPj) par un système (SR) comprenant a) un boîtier mobile (BM) pouvant se déplacer, par analyse d'images de l'environnement situé au moins devant lui, jusqu'à un endroit choisi dudit véhicule (V) pour transférer par induction de l'énergie électrique produite à partir d'un courant fourni par un câble d'alimentation (CA), et b) une base (BF) fournissant ledit courant audit câble d'alimentation (CA), **caractérisé en ce qu'**il comprend î) une première étape (10-110) dans laquelle, en cas de réception par ledit boîtier mobile (BM) d'informations définissant ladite recharge, ledit boîtier mobile (BM) se déplace d'une position initiale jusqu'à un élément de référence (ERj) associé audit emplacement (EPj) et détectable dans lesdites images d'environnement, ii) une deuxième étape (120-190) dans laquelle ledit boîtier mobile (BM) se déplace dudit élément de référence (ERj) jusqu'audit endroit choisi en enregistrant au moins une position sur un trajet qu'il suit, puis débute ladite recharge, et iii) une troisième étape (200-250) dans laquelle, une fois ladite recharge terminée, ledit boîtier mobile (BM) se déplace jusqu'audit élément de référence (ERj) en repassant par chaque position enregistrée, puis jusqu'à ladite position initiale en se repérant par rapport audit élément de référence (ERj) par analyse desdites images d'environnement.

2. Procédé selon la revendication 1, **caractérisé en ce que** dans ladite première étape (10-110) ledit boîtier mobile (BM) se déplace après avoir effectué à ladite position initiale un étalonnage de distance et/ou de forme et/ou de couleur réussi par rapport à un élément de référence (ERj).

3. Procédé selon la revendication 2, **caractérisé en ce que** dans ladite première étape (10-110) ledit boîtier mobile (BM) effectue ledit étalonnage i) en déterminant dans au moins une image d'environnement une distance le séparant dudit élément de référence (ERj) et une forme et une couleur de ce dernier (ERj), puis ii) en comparant, d'une première part, ladite distance déterminée à une distance stockée et associée à cet élément de référence (ERj), d'une deuxième part, ladite forme déterminée à une forme stockée et associée à cet élément de référence (ERj), et, d'une troisième part, ladite couleur déterminée à une couleur de référence stockée et associée à cet élément de référence (ERj), et iii) en cas de correspondance entre lesdites distances déterminée et stockée, entre lesdites formes déterminée et stockée et entre lesdites couleurs déterminée et stockée, en utilisant ladite couleur déterminée en tant que couleur de référence dudit élément de référence (ERj) dans l'analyse desdites images d'environnement pendant le déplacement jusqu'audit élément de référence (ERj).

4. Procédé selon l'une des revendications 1 à 3, **caractérisé en ce que** dans ladite première étape (10-110) lesdites informations définissant la recharge sont représentatives au moins d'une durée de ladite recharge ou d'un niveau de charge de ladite batterie (BR) en fin de ladite recharge, d'un niveau de charge en cours de ladite batterie (BR) avant ladite recharge, dudit emplacement (EPj) sur lequel est garé ledit véhicule (V), et d'un type dudit véhicule (V) définissant ladite batterie (BR) et un type et une hauteur par rapport au sol dudit emplacement (EPj) d'une bobine secondaire faisant partie d'un circuit secondaire (CS) équipant ledit véhicule (V) et transformant en courant de recharge pour ladite batterie (BR) de l'énergie électrique transférée par induction par une bobine primaire (BP) faisant partie d'un circuit primaire équipant ledit boîtier mobile (BM) et alimenté en courant par ledit câble d'alimentation (CA).

5. Procédé selon l'une des revendications 1 à 4, **caractérisé en ce que** dans ladite première étape (10-110) ledit boîtier mobile (BM) considère qu'il est arrivé audit élément de référence (ERj) lorsqu'une distance le séparant dudit élément de référence (ERj) et déterminée dans une image d'environnement est inférieure à un premier seuil de distance.

6. Procédé selon l'une des revendications 1 à 5, **caractérisé en ce que** dans ladite deuxième étape (120-190) ledit boîtier mobile (BM) se déplace jusqu'audit endroit choisi après avoir dépassé et/ou contourné ledit élément de référence (ERj).

7. Procédé selon la revendication 4 prise en combinaison avec l'une des revendications 1, 2, 3, 5 et 6, **caractérisé en ce que** dans ladite deuxième étape (120-190) une fois ledit boîtier mobile (BM) parvenu audit endroit choisi il positionne au moins ladite bobine primaire (BP) à une hauteur fonction dudit type et de ladite hauteur par rapport au sol de l'emplacement (EPj) de la bobine secondaire.

8. Procédé selon l'une des revendications 1 à 7, **caractérisé en ce que** dans ladite troisième étape (200-250) ledit boîtier mobile (BM) se déplace jusqu'audit élément de référence (ERj), puis dépasse et/ou contourne ce dernier (ERj), puis se déplace vers ladite position initiale en fonction de ses positions successives par rapport audit élément de référence (ERj) déterminées dans des images d'environnement successives, jusqu'à ce que sa position déterminée soit supérieure à un second seuil de distance.

9. Procédé selon l'une des revendications 1 à 8, **caractérisé en ce que** dans ladite première étape (10-110) ledit boîtier mobile (BM) reçoit, par voie d'ondes en provenance de ladite base (BF), une partie au moins desdites informations définissant la recharge, ladite base (BF) ayant préalablement reçu ces dernières informations d'une application logicielle (AL) installée dans un équipement électronique (EE) communicant par voie d'ondes et utilisé par un usager dudit véhicule (V) ou dans ledit véhicule (V).

10. Produit programme d'ordinateur comprenant un jeu d'instructions qui, lorsqu'il est exécuté par des moyens de traitement, est propre à mettre en œuvre le procédé de recharge selon l'une des revendications précédentes pour recharger par induction une batterie (BR) d'un véhicule (V) garé sur un emplacement (EPj).

## Patentansprüche

1. Verfahren zum induktiven Laden einer Batterie (BR) eines auf einem Standort (EPj) abgestellten Fahrzeugs (V) durch ein System (SR) umfassend a) eine bewegliche Box (BM) durch Bildanalyse aus der mindestens lokalisierten Umgebung davor, zu einer ausgewählten Stelle des Fahrzeugs (V), um durch Induktion elektrische Energie zu übertragen, die aus einem Strom erzeugt wird, der von einem Stromkabel (CA) geliefert wird, und b) eine Basis (BF), die den Strom an das Stromkabel (CA), **dadurch gekennzeichnet, dass** es i) eine erste Stufe (10-110) umfasst, in der im Falle des Empfangs von d Informationen, die das Wiederaufladen definieren, durch die Mobilbox (BM) die Mobilbox (BM) sich von einer Anfangsposition bewegt zu einem Referenzelement (ERj), das dem Ort (EPj) zugeordnet ist und in den Umgebungsbildern erkennbar ist, ii) einen zweiten Schritt (120-190), in dem sich das mobile Gehäuse (BM) von dem Referenzelement (ERj) zu dem Ort bewegt eingewählt Aufzeichnen mindestens einer Position auf einem Pfad, dem sie folgt, dann Starten des Wiederaufladens, und iii) einen dritten Schritt (200-250), in dem sich die Mobilbox (BM) nach Beendigung des Wiederaufladens zu dem Element (ERj) bewegt durch Zurückgehen durch jede aufgezeichnete Position, dann hinauf zu der Anfangsposition, indem man sich in Bezug auf das Referenzelement (ERj) durch Analysieren der Umgebungsbilder lokalisiert.

2. Verfahren nach Anspruch 1, **dadurch gekennzeichnet, dass** sich in dem ersten Schritt (10-110) die mobile Box (BM) bewegt, nachdem sie an der Anfangsposition eine Kalibrierung des Abstands und/oder der Form und/oder der Farbe durchgeführt hat, die relativ zu a passiert wurde Bezugselement (ERj).

3. Verfahren nach Anspruch 2, **dadurch gekennzeichnet, dass** in dem ersten Schritt (10-110) die Mobileinheit (BM) die Kalibrierung i) durch Bestimmen einer Entfernung, die sie von dem Referenzelement (ERj ) trennt, und a in mindestens einem Umgebungsbild durchführt Form und einer Farbe des letzteren (ERj), dann ii) durch Vergleichen einerseits der ermittelten Distanz mit einer gespeicherten und diesem Referenzelement (ERj) zugeordneten Distanz, andererseits der ermittelten Form mit einer gespeicherten Form und zugeordnet zu diesem Referenzelement (ERj), und drittens die bestimmte Farbe zu einer gespeicherten Referenzfarbe und zugeordnet zu diesem Referenzelement (ERj), und iii) im Falle einer Übereinstimmung zwischen dem bestimmten und dem gespeicherten Abstand, zwischen den bestimmten und gespeicherten Formen und zwischen den bestimmten und gespeicherten Farben, wobei die bestimmte Farbe als Referenzfarbe des Referenzelements (ERj) bei der Analyse der Bilder verwendet wird Umgebung ges während der Bewegung zu dem Referenzelement (ERj).

4. Verfahren nach einem der Ansprüche 1 bis 3, **dadurch gekennzeichnet, dass** in dem ersten Schritt (10-110) die das Wiederaufladen definierende Information zumindest für eine Dauer des Wiederaufladens oder einen Ladezustand der Batterie (BR) bei dem repräsentativ ist Ende des Wiederaufladens, eines aktuellen Ladezustands der Batterie (BR) vor dem Wiederaufladen, des Ortes (EPj), an dem das Fahrzeug (V) geparkt ist, und eines Typs des Fahrzeugs (V), der die Batterie definiert (BR) und Art und Höhe relativ zum Boden der Stelle (EPj) einer Sekundärspule, die Teil eines Sekundärkreises (CS) ist, mit dem das Fahrzeug (V) ausgestattet ist und die übertragene elektrische Energie in Ladestrom für die Batterie (BR) umwandelt durch Induktion durch eine Primärspule (BP), die Teil eines Primärkreises ist, der das mobile Gehäuse (BM) ausstattet und durch das Stromversorgungskabel (CA) mit Strom versorgt wird.

5. Verfahren nach einem der Ansprüche 1 bis 4, **dadurch gekennzeichnet, dass** in dem ersten Schritt (10-110) die Mobileinheit (BM) davon ausgeht, dass sie an dem Referenzelement (ERj) angekommen ist, wenn eine Entfernung, die sie von dem Referenzelement trennt (ERj) und in einem Umgebungsbild bestimmt kleiner als ein erster Entfernungsschwellenwert ist.

6. Verfahren nach einem der Ansprüche 1 bis 5, **dadurch gekennzeichnet, dass** sich in dem zweiten Schritt (120-190) die Mobilbox (BM) zu dem ausgewählten Ort bewegt, nachdem sie das Referenzelement (ERj ) passiert und/oder umgangen hat.

7. Verfahren nach Anspruch 4 in Kombination mit einem der Ansprüche 1, 2, 3, 5 und 6, **dadurch gekennzeichnet, dass** in dem zweiten Schritt (120-190) die Mobilbox (BM) positioniert wird, sobald sie an dem ausgewählten Ort angekommen ist mindestens die Primärspule (BP) in einer Höhe, die von dem Typ und der Höhe relativ zum Boden des Ortes (EPj) der Sekundärspule abhängt.

8. Verfahren nach einem der Ansprüche 1 bis 7, **dadurch gekennzeichnet, dass** sich in dem dritten Schritt (200-250) das bewegliche Gehäuse (BM) bis zu dem Referenzelement (ERj) bewegt, dann letzteres überholt und/oder umgeht (ERj), bewegt sich dann in Abhängigkeit von seinen aufeinanderfolgenden Positionen in Bezug auf das Referenzelement (ERj), das in aufeinanderfolgenden Umgebungsbildern bestimmt wurde, auf die Anfangsposition zu, bis seine bestimmte Position größer als ein zweiter Abstandsschwellenwert ist.

9. Verfahren nach einem der Ansprüche 1 bis 8, **dadurch gekennzeichnet, dass** in dem ersten Schritt (10-110) das bewegliche Gehäuse (BM) mindestens einen Teil des besagten Signals durch von der Basis (BF) kommende Wellen empfängt Informationen, die das Aufladen definieren, wobei die Basis (BF) zuvor diese neuesten Informationen von einer Softwareanwendung (AL) erhalten hat, die in einem elektronischen Gerät (EE) installiert ist, das über die Luft kommuniziert und von einem Benutzer des Fahrzeugs oder in dem Fahrzeug (V) verwendet wird (V).

10. Computerprogrammprodukt einschließlich a Spiel Anleitung wer, wenn er ist hingerichtet durch des meint von Behandlung, ist besitzen bei stellen in Arbeit das Prozess Aufladen gem eins des Ansprüche früher zum induktiven Laden einer Batterie (BR) eines auf einem Stellplatz (EPj) abgestellten Fahrzeugs (V).

## Claims

1. Method for inductively charging a battery (BR) of a vehicle (V) parked on a location (EPj) by a system (SR) comprising a) a mobile box (BM) capable of moving, by image analysis from the environment located at least in front of it, to a chosen location of said vehicle (V) to transfer by induction electrical energy produced from a current supplied by a power cable (CA), and b ) a base (BF) supplying said current to said power cable (CA), **characterized in that** it comprises i) a first stage (10-110) in which, in the event of reception by said mobile box (BM) d information defining said recharging, said mobile box (BM) moves from an initial position to a reference element (ERj) associated with said location (EPj) and detectable in said environment images, ii) a second step (120-190) in which said mobile casing (BM) moves from said reference element (ERj) to said place chosen in recording at least one position on a path that it follows, then starts said recharging, and iii) a third step (200-250) in which, once said recharging is finished, said mobile box (BM) moves to said element (ERj) by going back through each recorded position, then up to said initial position by locating oneself with respect to said reference element (ERj) by analyzing said environment images.

2. Method according to claim 1, **characterized in that** in said first step (10-110) said mobile box (BM) moves after having carried out at said initial position a calibration of distance and/or shape and/or color passed by relative to a reference element (ERj).

3. Method according to claim 2, **characterized in that** in said first step (10-110) said mobile unit (BM) performs said calibration i) by determining in at least one environment image a distance separating it from said reference element (ERj ) and a shape and a color of the latter (ERj), then ii) by comparing, on the one hand, said determined distance with a stored distance and associated with this reference element (ERj), on the second hand, said determined shape to a stored shape and associated with this reference element (ERj), and, on the third hand, said determined color to a stored reference color and associated with this reference element (ERj), and iii) in case of correspondence between said determined and stored distances, between said determined and stored shapes and between said determined and stored colors, using said determined color as a reference color of said reference element (ERj) in the analysis of said images environmental ges during the movement to said reference element (ERj).

4. Method according to one of claims 1 to 3, **characterized in that** in said first step (10-110) said information defining the recharging is representative at least of a duration of said recharging or of a charge level of said battery (BR) at the end of said recharging, of a current charge level of said battery (BR) before said recharging, of said location (EPj) on which said vehicle (V) is parked, and of a type of said vehicle (V) defining said battery (BR) and a type and height relative to the ground of said location (EPj) of a secondary coil forming part of a secondary circuit (CS) equipping said vehicle (V) and transforming into recharging current for said battery (BR) electrical energy transferred by induction by a primary coil (BP) forming part of a primary circuit equipping said mobile casing (BM) and supplied with current by said power supply cable (CA).

5. Method according to one of claims 1 to 4, **characterized in that** in said first step (10-110) said mobile unit (BM) considers that it has arrived at said reference element (ERj) when a distance separating it from said reference element (ERj) and determined in an environment image is less than a first distance threshold.

6. Method according to one of claims 1 to 5, **characterized in that** in said second step (120-190) said mobile box (BM) moves to said chosen location after having passed and/or bypassed said reference element (ERj).

7. Method according to claim 4 taken in combination with one of claims 1, 2, 3, 5 and 6, **characterized in that** in said second step (120-190) once said mobile box (BM) has arrived at said chosen location it positions at least said primary coil (BP) at a height depending on said type and on said height relative to the ground of the location (EPj) of the secondary coil.

8. Method according to one of Claims 1 to 7, **characterized in that** in the said third step (200-250) the said mobile casing (BM) moves as far as the said reference element (ERj), then overtakes and/or bypasses the latter (ERj), then moves towards said initial position as a function of its successive positions with respect to said reference element (ERj) determined in successive environment images, until its determined position is greater than a second threshold of distance.

9. Method according to one of Claims 1 to 8, **characterized in that** in the said first step (10-110) the said mobile casing (BM) receives, by way of waves coming from the said base (BF), at least a part said information defining the recharging, said base (BF) having previously received this latest information from a software application (AL) installed in electronic equipment (EE) communicating over the air and used by a user of said vehicle (V) or in said vehicle (V).

10. Computer program product including a Game instructions who, when he is executed by of the means of treatment, is own at put in work the process recharge according to one of the claims previous for inductively charging a battery (BR) of a vehicle (V) parked on a location (EPj).
